# EUROPÄISCHE PATENTANMELDUNG

(11) **EP 1 316 570 A1**
(43) Veröffentlichungstag der Anmeldung: **04.06.2003**
(21) Anmeldenummer: 02025915.6
(22) Anmeldetag: 20.11.2002
(51) Int. Cl.: C08G 18/38, C09K 11/06, C09D 5/22

(54) **Darstellung von Polymeren zur Erzeugung von Lumineszenzeffekten**

(30) Priorität: 03.12.2001 DE 20119574 U
(71) Anmelder: Kynast, Ulrich, Prof. Dr., 48565 Steinfurt (DE); Paso Vertrieb chem.-techn. Produkte GmbH, 48161 Münster (DE)
(72) Erfinder: Kynast, Ulrich, Prof. Dr., 48565 Steinfurt (DE)
(74) Vertreter: Habbel, Hans-Georg, Dipl.-Ing.

(57) **Zusammenfassung**

Die Erfindung bezieht sich auf die Darstellung von Polymeren zur Erzeugung von Lumineszenzeffekten, wobei es sich um solche Polymere handelt, deren Monomere, Oligomere oder Präpolymere durch Lösung oder chemische Anbindung von Komplexen der Seltenen Erden modifiziert werden können und eine oder mehrere der Polymerkomponenten vor der Polymerisation mit Komplexen der Seltenen Erden versetzt werden.

## Beschreibung

Die Erfindung bezieht sich auf die Darstellung von Polymeren mit Komplexen der Seltenen Erden zur Erzeugung von Lumineszenzeffekten.

Die Modifikation von Polymeren durch den Einsatz von zahlreichen, zur Lumineszenz befähigten, rein organischen Luminophoren einschließlich Laserfarbstoffen ist wohlbekannt und findet sich in einer Reihe von Alltagsprodukten.

Für die Einbettung in Siliconen sind auch bereits Komplexe der Seltenen Erden beschrieben worden; dabei handelt es sich um β-Diketonate des Europiums und Terbiums, sie müssen als Lösungen in den Polymeren betrachtet werden.

Lumineszenzeigenschaften von Komplexen der Seltenen Erden sind mechanistisch gut untersucht und verstanden. Sie sind auch in zahlreichen Publikationen beschrieben; beispielhaft für aromatische Carboxylate sei Inorg. chim. Acta, 293 (1999), 167 zitiert, für β-Diketonate auf Chem. Rev., 196 (2000) 165 hingewiesen und US 3 367 910, US 3 475 638 und US 3 377 292 genannt.

Die Verwendung von organischen Leuchtstoffen ist zwangsläufig mit relativ breitbandigen Emissionen verbunden, zudem verlangt der Mechanismus der Lumineszenz einen spektralen Überlapp zwischen Absorption / Anregung und Emission, so daß die beiden Komponenten energetisch nie sehr weit voneinander entfernt sein können, was insbesondere für Emissionen im langwelligeren, sichtbaren Spektralbereich (z. B. rote Emission) dazu führt, daß das mit dem Leuchtstoff bezuschlagte Polymer eine Eigenfarbe aufweist. Zudem gehen mit dem Einsatz organischer Leuchtstoffe vergleichsweise starke Alterungseffekte einher, so daß ihre Verwendungsmöglichkeiten eingeschränkt sind.

Die hingegen in den US-Patenten verwendeten Komplexe weisen zum einen geringe Löslichkeiten in den Polymeren auf, zum anderen sind die absoluten Leuchteffizienzen der beschriebenen β-Diketonate vergleichsweise gering, auch sind sie bereits als Reinkomplexe einer relativ starken, photochemischen Alterung unterworfen, DE 30 50 703 C2.

Der Erfindung liegt die Aufgabe zugrunde, einen Leuchtstoff zu entwickeln, der sich vollkommen transparent in Polyurethane, Silikone, Epoxide und Acrylate einarbeiten läßt.

Diese der Erfindung zugrundeliegende Aufgabe wird durch die Lehre des Hauptanspruches gelöst.

Entsprechende Ausgestaltungen sind in den Unteransprüchen erläutert.

Mit anderen Worten ausgedrückt können durch den Erfindungsvorschlag transparente und ungefärbte Polymere auf Polymerbasis so gewonnen werden, daß sie in der Lage sind, auf elektrische oder Anregung durch Licht eine visuelle Antwort zu ergeben. Dazu werden Komplexe der Seltenen Erden in die Polymermatrix eingeschmolzen oder chemisch an das Polymergerüst angebunden.

Die Lösung der Komplexe in den Präpolymeren oder ihre chemische Anbindung an das Polymergerüst liefern völlig transparente und effiziente Materialien mit den inhärenten Vorteilen der Seltenerd-Emissionen, aus denen sich beispielhaft die im folgenden genannten Anwendungsmöglichkeiten ergeben.

Die Polymere können zur Herstellung von Körpern und Schichten dienen, die bei Bestrahlung mit UV-Licht sichtbares Licht ausstrahlen. Sie sind daher z. B. auch geeignet, um als Ummantelung für Leuchtstoffröhren eingesetzt zu werden, wenn aus diesen austretendes UV-Licht in sichtbares Licht konvertiert werden soll; zusätzlich ergibt sich in dieser Anwendung eine mechanische Schutzwirkung.

Die Schichten oder Körper können auch strukturiert sein, z. B. um erst bei Einfall der Anregungsstrahlung die Struktur erkennbar sein zu lassen. Beispiele für den Einsatz der modifizierten Polyurethane in diesem Sinne sind etwa die Erzeugung von leuchtenden zweidimensionalen Bildern, z. B. eines Logos oder eines Schriftzuges, jedoch können diese durch entsprechende Formgebung auch dreidimensional, z. B. als Figur, ausgestaltet werden. Es ist so auch möglich, die Abbildung oder den Körper, zunächst unsichtbar, in eine beliebige, vollständig durchsichtige Polymerform einzubetten (z. B. in einen transparenten Polymerwürfel), die dann bei Bestrahlung mit UV-Licht die Struktur zu beinhalten scheint.

Sie können weiterhin als Plastikummantelungen von UV- oder kurzwellig sichtbar emittierenden Leuchtdioden (LEDs) eingesetzt werden, um farbige Emissionen oder, durch Kombination verschiedener Seltenerdkomplexe, weißes Licht zu erzeugen. Aufgrund ihres Absorptions- bzw. Anregungsspektrums sind die modifizierten Polyurethane besonders geeignet, durch UV-, bedingt auch durch blau emittierende Leuchtdioden (LEDs) angeregt zu werden. Sie können daher ausgezeichnet mit kommerziellen UV-LEDs kombiniert werden, wodurch sich eine Vielzahl von möglichen Geometrien der Kombination ergibt.

In dünnen Schichten können die modifizierten Polymere als Emitterschichten in organischen LEDs Verwendung finden.

Weiterhin können die modifizierten Polymere als Bestandteil der LED selbst verwendet werden, indem der die eigentliche LED bedeckende Plastikkopf durch sie ersetzt wird. Durch geeignete Auswahl der Komplexe können somit aus blau- oder UVemittierenden LEDs Lichtquellen in den für die jeweiligen Seltenerdioden charakteristischen Farben hergestellt werden. Durch geeignete Kombination lassen sich so auch weißes Licht emittierende LEDs erhalten. Ein besonderer Vorteil der Verwendung der Seltenen Erden gegenüber z. B. organischem Zuschlägen mit breitbandiger Emission besteht in der Liniencharakteristik der Emission. Hierdurch sind besonders hohe Lumeneffizienzen möglich (Dreifarbenkonzept).

Durch entsprechende geometrische Ausgestaltung des Plastikkopfes der LED ist es zudem möglich, einen Laser-Effekt zu realisieren. Hierbei wird das Polymer, welches mit geeigneten Komplexen im Sinne des Patentes, darunter dann auch solchen, die im NIR-Bereich emittieren, durch die LED gepumpt.

Desweiteren können in Dauerbestrahlungsmessungen merkliche Alterungsvorteile der Seltenerd-Komplexe gegenüber organischen Emittern und auch reinen Europium-Diketonaten beobachtet werden.

Potentielle weitere Einsatzmöglichkeiten ergeben sich im Bereich der optischen Wellenleiter bzw. Lichtleitfasertechnologie und der Sensorik.

Die vorgestellten Leuchtstoffe sind bisher nicht bekannt, da es bei den herkömmlichen anorganischen Leuchtstoffen nicht möglich ist, eine vollkommene Transparenz zu erhalten. Ein weiterer Vorteil der beschriebenen Leuchtmittel ist die im Gegensatz zu herkömmlichen Leuchtstoffen sehr hohe Lumenausbeute. Dadurch können sehr "klare" Farben dargestellt werden. Außerdem ist es mit sehr geringer Energie möglich, sichtbares Licht zu erzeugen.

Ausführungsbeispiele der Erfindung werden im folgenden wiedergegeben.

### 1. Herstellung der Komplexe der Seltenen Erden:

Zur Herstellung eines grün lumineszierenden Polyurethans mit dem Salz einer aromatischen Carbonsäure kann z. B. Terbium-Salicylat (Tris-(Salicylato) Terbium (III) mit Wasser,
Tb(HO-C₆H₄COO)₃ · nH₂O, im folgenden Tb (sal)₃ genannt) verwendet werden.

Zur Darstellung desselben werden 5.2 g Salicylsäure in 50 ml EtOH gelöst und mit 50 ml Wasser versetzt. Zu dieser Lösung werden unter Rühren 25 ml einer wässrigen 0,49 molaren Tb³⁺-Lösung zugefügt und mittels verdünnten Ammoniaks der pH-Wert auf ca. 7 eingestellt. Der entstehende weiße Niederschlag wird abfiltriert und im Vakuum bei Temperaturen von 80° C getrocknet, falls spätere Blasenbildung vermieden werden soll, kann Kristallwasser des Tb(sal)₃ auch bei höheren Temperaturen, z. B. 160° C, im Vakuum weitgehend entfernt werden; das dann erhaltene Tb(sal)₃ wird unter Feuchtigkeitsausschluß gelagert.

Zur Herstellung eines rot lumineszierenden Polyurethans mit einem β-Diketonat kann z. B. Europium-Thenyl-Acetylacetonat mit Phenanthrolin (Tris- [1-(2-Thenyl)-4,4,4- Trifluorbutan-1,3-dionato]Eu(III) · 1,10-Phenanthrolin, [Eu(C₄H₃S-CO-CH-CO-CF₃)₃] · C₁₂H₈N₂ im folgenden Eu(ttfa)₃phen genannt) verwendet werden.

Zur Darstellung von Eu(ttfa)₃phen werden zunächst 800 mg 1-(2-Thenyl)-4,4,4-Trifluorbutan-1,3-dion (ttfa) in 50 ml Wasser suspendiert und mit Ammoniak auf pH=8 eingestellt. Hierzu werden 10 ml einer wässrigen, 0,12 molaren Eu³⁺ - Lösung zugegeben und ggf. mit verdünntem Ammoniak auf pH=8-8.5 eingestellt und die vereinigten Lösungen über 1 Stunde bei 100° C gerührt. Das gebildete Präzipitat wird abfiltriert und getrocknet, in Diethylether aufgenommen und mit wasserfreiem CaCl₂ zur Trocknung etwa 1 Stunde stehengelassen. Hiernach wird vom CaCl₂ abfiltriert und der Diethylether mittels Rotationsverdampfer abgezogen.

Zu 400 mg des so erhaltenen Zwischenprodukts werden 100 mg 1,10-Phenanthrolin H₂O in 50 ml Ethanol zugegeben und über 1 Stunde zum Sieden erhitzt. Die Lösung wird eingeengt und das Produkt (Eu(ttfa)₃phen abfiltriert und bei 90° C getrocknet.

### 2. Zusatz der Seltenerd-Komplexe zu der Polymerkomponenten:

200 mg des erhaltenen Tb(sal)₃ werden in 0,5 ml Dimethylformamid unter Erwärmen gelöst. Die Lösung wird sodann zu einem frisch bereiteten Gemisch von je 5 ml eines Polyols mit der OH-Zahl 299.2 und eines Isocyanats mit 22.7 % (w/w) NCO zugefügt und vermischt. Die Mischung wird zur Entfernung von Luft- und anderweitig entstehenden Blasen ca. 10 Min. evakuiert. Die Mischung wird nun z. B. in eine Teflon-Form der gewünschten Geometrie gegossen und bei 60-65° C polymerisiert; zur vollständigen Blasenentfernung kann nach dem Eingießen in die Form erneut evakuiert werden oder die Polymerisation im Vakuum erfolgen.

Zur Herstellung der rot emittierenden Polyurethane wird analog verfahren, mit dem Unterschied, daß der Komplex durch Erwärmen zunächst in Toluol gelöst werden kann, welches in der Folge nach der Mischung aller Komponenten durch Evakuieren zumindest teilweise entfernt werden kann. Für Konzentrationen höher als etwa 4 mg Eu(ttfa)₃phen / 20 ml Polymer wird auf DMF als Lösungsmittel für den Komplex zurückgegriffen.

Eine Verwendung des Komplexes ist in zahlreichen Anwendungen möglich. Dies könnte u. a. die Verwendung als Leuchtstoff in Leuchtstoffröhren sein. Hier könnte z. B. das Leuchtpolymer von außen auf die Röhre aufgetragen werden. Vorteil wäre durch die Polymerschicht ein Schutz gegen Splitter, zudem eine Umwandlung von UV-Restemissionen in sichtbares Licht.
Ein weiterer Einsatzort ist z. B. die Verwendung des Komplexes in den zukunftsträchtigen LED's. Hiermit kann reineres Licht als in herkömmlichen LED's hergestellt werden, was die Lumen-Ausbeute von weißen LED's beträchtlich erhöht. Bei den bisher hergestellten weißen LED's ist dies ein Problem, was sich mit herkömmlichen Leuchtstoffen nicht verbessern läßt. Desweiteren können durch eine entsprechende geometrische Ausgestaltung bei Verwendung geeigneter Polymer-Komplex-Kombinationen Lasereffekte nutzbar gemacht werden. Weiterer Einsatzort könnte die Sicherheitstechnik sein, wo Gegenstände für das menschliche Auge unsichtbar kodiert werden. (Bedruckung von Dokumenten mit vollkommen transparenter UV-Tinte). Außerdem ist auch eine Verwendung in der Werbeindustrie, wo es auf optische Effekte ankommt, möglich. Hier kann in einer durchsichtigen Scheibe durch UV-Licht eine Schrift oder sogar ein dreidimensionaler Körper zum Leuchten gebracht werden.

## Patentansprüche

1. Darstellung von Polymeren zur Erzeugung von Lumineszenzeffekten, **dadurch gekennzeichnet, daß** es sich um solche Polymere handelt, deren Monomere, Oligomere oder Präpolymere durch Lösung oder chemische Anbindung von Komplexen der Seltenen Erden modifiziert werden können und eine oder mehrere der Polymerkomponenten vor der Polymerisation mit Komplexen der Seltenen Erden versetzt werden.

2. Polymere nach Anspruch 1, **dadurch gekennzeichnet, daß** es sich um monomere, oligomere oder präpolymere Vorstufen von Polyurethanen handelt, deren Isocyanat-Komponenten aliphatische oder aromatische Isocyanat-Baueinheiten aufweisen (HDI oder MDI) und die zweite Komponente den aliphatischen oder aromatischen Polyolen oder Aminen zuzurechnen ist.

3. Polymere nach Anspruch 1, **dadurch gekennzeichnet, daß** es sich um monomere, oligomere oder präpolymere Vorstufen von Siliconen handelt, wobei der Siliconbaustein aliphatische oder aromatische (z. B. Methyl-, Ethyl-, Phenyl- Benzyl- oder substituierte Phenyl) sowie zur Polymerisation bzw. Kondensation befähigende (z. B. Hydroxy-, Halogeno-, Cyanato-) Reste trägt.

4. Polymere nach Anspruch 1, **dadurch gekennzeichnet, daß** es sich um monomere, oligomere oder präpolymere Vorstufen von Epoxidpolymeren handelt, die mit aliphatischen, aromatischen oder substituierten aromatischen di-Alkoholen (z. B. Bisphenolen) polymerisiert werden können.

5. Polymere nach Anspruch 1, **dadurch gekennzeichnet, daß** es sich um präpolymere Polyacrylate, präpolymere Polyacrylsäuren oder um partiell in der Esterform vorliegende präpolymere Polyacrylsäuren handelt, wobei die Ester aliphatische, aromatische oder substituierte, aromatische Ester sein können und das Gerüst mit aliphatischen, aromatischen oder substituierten, aromatischen Resten substituiert sein kann.

6. Komplexe der Seltenen Erden zur Darstellung von Polymeren nach Anspruch 1, **dadurch gekennzeichnet, dass** die an die Seltenen Erden gebundenen Komplexliganden chemisch zu den aromatischen Carbonsäuren gehören und mono,-di-, tri- oder tetra-Carbonsäuren einschließlich der Pyridin-Carbonsäuren sind, wobei sie neben den Säuregruppen weitere Substituenten aufweisen können, insbesondere solche, die zu Reaktionen mit Isocyanat-, Epoxi- und Silanolgruppen, befähigt sind, wie Benzol- oder Pyridin-Hydroxy- und Aminocarbonsäuren.

7. Komplexe der Seltenen Erden zur Darstellung von Polyurethanen nach Anspruch 1, **dadurch gekennzeichnet, daß** die Komplexliganden den β-Diketonen zuzuordnen sind, wobei β-Diketonato-Komplexe durch zusätzliche Liganden co-koordiniert sind. Co-Liganden sind insbesondere die zweizähnigen Chelatbildner 1,10-Phenanthrolin oder 2,2'-Bipyridin, grundsätzlich können aber auch ein-, sowie drei - und vierzähnige Liganden Verwendung finden.
